# FASCICULE DE BREVET EUROPEEN

(11) **EP 3 214 927 B1**
(45) Date de publication et mention de la délivrance du brevet: **11.03.2020**
(21) Numéro de dépôt: 15804881.9
(22) Date de dépôt: 05.11.2015
(51) Int. Cl.: A01K 1/015

(54) **SYSTÈME POUR LA COLLECTE DES LIQUIDES S'ÉCOULANT SUR LE SOL D'UNE ENCEINTE POUR L'ÉLEVAGE D'ANIMAUX**
SYSTEM ZUM SAMMELN VON AUF DEM BODEN EINES GEHÄUSES STRÖMENDEN FLÜSSIGKEITEN IN DER TIERHALTUNG
SYSTEM FOR COLLECTING THE LIQUIDS FLOWING ON THE GROUND OF AN ENCLOSURE FOR REARING ANIMALS

(30) Priorité: 07.11.2014 FR 1460792
(43) Date de publication de la demande: 13.09.2017
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2015/052992
(87) Numéro de publication internationale: WO 2016/071640

(56) Documents cités:
- WO-A1-97/25857
- DE-A1-102004 012 716
- DE-C1- 19 519 088
- FR-A- 1 306 778
- GB-A- 1 395 072
- GB-A- 1 395 072

## Description

### DOMAINE TECHNIQUE AUQUEL SE RAPPORTE L'INVENTION

La présente invention concerne un système pour la collecte des liquides s'écoulant sur le sol d'une enceinte pour l'élevage d'animaux, par exemple de bovins (bovins laitiers et/ou bovins à viande), en particulier pour l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régis en particulier par des obligations légales qui sont définies dans les Traités d'Amsterdam (1999) et de Lisbonne (2009) relatifs au Protocole sur la protection et le bien-être des animaux, ainsi que l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac.

De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

En particulier, parmi les infections à l'origine de boiteries, la dermatite digitée, encore appelée « maladie de Mortellaro », est la plus problématique.

Il existe par conséquent un besoin de solutions techniques permettant une réduction de l'humidité des surfaces d'appui sur le sol des enceintes d'élevage avec une évacuation efficace des liquides, de sorte à améliorer les conditions d'adhérence et les conditions sanitaires des animaux.

Les documents DE 195 19 088 et WO 97/25857 décrivent tous deux un système pour la collecte des liquides s'écoulant sur le sol d'une enceinte pour l'élevage d'animaux.

Dans ces documents, le sol comporte des rainures destinées à recevoir les liquides.

Le revêtement de sol est ici constitué par la chape en bitume ou béton de l'enceinte.

Des chaines équipées de plots sont rapportées dans ces rainures et sont destinés à cheminer sur la longueur de ces dernières.

Mais une telle solution nécessite des travaux importants de génie civil. Elle est alors relativement complexe et onéreuse à mettre en œuvre.

Il existe par conséquent toujours un besoin de solutions techniques permettant une réduction de l'humidité des surfaces d'appui sur le sol des enceintes d'élevage avec une évacuation efficace des liquides, avantageusement sans nécessiter des travaux de gros œuvre importants, de sorte à améliorer les conditions d'adhérence et les conditions sanitaires des animaux.

Il existe toujours un intérêt pour des solutions simples qui permettent une certaine séparation des urines et des fèces, de manière à limiter la production d'ammoniac dans les enceintes d'élevage.

### OBJET DE L'INVENTION

Dans ce contexte, la demanderesse a développé un nouveau système pour la collecte des liquides s'écoulant sur le sol d'une enceinte pour l'élevage d'animaux, visant à améliorer les conditions d'hygiène dans une enceinte d'élevage, notamment par une gestion optimale des liquides selon la revendication 1.

Ce système pour la collecte des liquides s'écoulant sur le sol d'une enceinte pour l'élevage d'animaux, par exemple de bovins, comprend :
(i) un revêtement de sol, comprenant :
   - des portions d'appui sur lesquels les animaux sont destinés à prendre appui, et
   - au moins deux rainures réparties sur ledit revêtement de sol, séparant lesdites portions d'appui et destinées à recevoir les liquides s'écoulant sur ledit revêtement de sol,
(ii) des moyens pour la collecte des liquides circulant au sein desdites rainures, et
(iii) des moyens pour pousser les liquides au sein des rainures dudit revêtement de sol, de manière à générer une circulation desdits liquides en direction desdits moyens de collecte.

Ce revêtement de sol est réalisé dans au moins un matériau apte à subir une déformation élastique ; et ledit revêtement de sol est adapté à être rapporté sur une surface support.

Un tel système permet une évacuation automatique et continue des liquides depuis lesdites portions d'appui, jusqu'auxdites rainures.

Les surfaces s'appui du revêtement de sol restent ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

Cette solution a notamment l'intérêt de permettre l'implantation d'un système de collecte dans une enceinte d'élevage existante, en rénovation, cela sans nécessiter de génie civil. Elle est en effet relativement simple et rapide à mettre en œuvre, notamment du fait que les rainures sont directement formées par le revêtement de sol rapporté.

L'environnement moins humide permet aussi à l'onglon des bovins d'être plus dur, ce qui fait partie de la santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Le revêtement de sol est avantageusement constitué par au moins une pièce qui est réalisée dans au moins un matériau apte à subir une déformation élastique, et qui est adaptée à être rapportée sur une surface support.

Selon l'invention, le revêtement de sol est constitué par (i) un ensemble de longerons qui sont solidarisés avec une surface support, cela de manière juxtaposée et tout en préservant un espacement définissant les rainures, ou (ii) un tapis comportant une embase dont une face inférieure est destinée à reposer sur une surface support, et une face supérieure est munie de structures saillantes ménagés à distance les uns des autres, qui délimitent entre eux les rainures et dont la face libre forme la portion d'appui.

Selon une caractéristique avantageuse, les moyens pour pousser les liquides comprennent :
- des organes d'entrainement qui sont chacun rapportés dans et le long de l'une desdites rainures, lesquels organes d'entrainement comportent chacun une surface de poussée qui est apte à pousser les liquides présents au sein de ladite rainure associée, et
- des moyens pour la manœuvre desdits organes d'entraînement au sein de leurs rainures respectives, de sorte que ladite au moins une surface de poussée génère ladite circulation de liquide au sein de sa rainure.

Selon une première forme de réalisation, les organes d'entrainement, mobiles en translation au sein des rainures, sont répartis sur la longueur d'un corps allongé.

Dans ce cas, de préférence :
- le corps allongé consiste en une corde et les organes d'entrainement consistent chacune en un nœud ménagé sur ladite corde, ou
- le corps allongé consiste en une chaîne constituée de plusieurs maillons assemblés entre eux et en ce que les organes de poussée sont formés par les maillons de ladite chaîne ou par des pièces saillantes rapportées sur les maillons de ladite chaîne.

Toujours dans ce cas, avantageusement, les moyens de manœuvre consistent en :
- des moyens pour la manœuvre des organes d'entraînement dans un unique sens de cheminement, ou
- des moyens pour la manœuvre des organes d'entraînement selon un mouvement oscillant, dans lequel les organes d'entrainement comportent une surface amont apte à limiter la poussée sur les liquides.

Selon une seconde forme de réalisation :
- l'un au moins des organes d'entrainement consiste en un organe en forme de vis formant une surface de poussée hélicoïdale, et
- les moyens de manœuvre consistent en des moyens pour la manœuvre en rotation dudit au moins un organe en forme de vis.

Selon d'autres caractéristiques avantageuses :
- le système pour la collecte des liquides comporte encore des moyens pour une alimentation des rainures avec un liquide de traitement ;
- les rainures sont rectilignes et s'étendent parallèlement les unes par rapport aux autres, délimitant entre elles une pluralité de portions d'appui qui ont chacune la forme d'une bande rectiligne ; dans ce cas, de préférence, les rainures ont chacune une largeur comprise entre 15 et 50 mm et une profondeur comprise entre 15 et 50 mm, et les portions d'appui ont une largeur comprise entre 50 et 500 mm ;
- les rainures ont une section en arc de cercle, ou en polygone, avec une face de fond prolongée à l'équerre, ou au moins approximativement à l'équerre, par deux faces latérales, avantageusement via des chanfreins ;
- les portions d'appui du revêtement de sol sont munies d'un relief antidérapant, et/ou d'un matériau abrasif, afin de permettre et/ou de favoriser l'usure et la santé du pied des animaux ;
- les moyens de collecte comportent des conduits débouchant dans les rainures, pour l'évacuation des liquides ;
- les moyens de poussée s'étendent dans l'épaisseur et l'encombrement desdites rainures, sans faire saillie par rapport auxdites portions d'appui attenantes.

La présente invention concerne encore une enceinte d'élevage équipée d'un système de collecte selon l'invention.

De préférence, l'enceinte d'élevage comprend un couloir de circulation comportant un axe longitudinal et recouvert par le revêtement de sol ; et les rainures du revêtement de sol sont agencées parallèlement, ou au moins approximativement parallèlement, par rapport audit axe longitudinal.

### DESCRIPTION DETAILLEE DE L'INVENTION

La présente invention sera encore illustrée, sans être aucunement limitée, par la description suivante de différents modes de réalisation particuliers, en relation avec les dessins annexés dans lesquels :
- la figure 1 représente, de manière schématique et selon un plan de coupe vertical, d'une partie d'un système de collecte des liquides dont le revêtement de sol consiste en un tapis en matériau apte à subir une déformation élastique dans lequel sont ménagées des chambres longitudinales étanches ;
- la figure 2 illustre le revêtement de sol selon la figure 1, dont les chambres longitudinales étanches contiennent un fluide destiné à participer à la déformation élastique de sa surface d'appui ;
- la figure 3 est une vue de dessus du revêtement de sol selon les figures 1 et 2, associé à des moyens pour pousser les liquides qui sont du type chaîne avec des éléments rapportés pour former les organes d'entrainement des liquides ;
- la figure 4 représente, de manière schématique et selon un plan de coupe vertical, un autre mode de réalisation du revêtement de sol qui est constitué par un ensemble de longerons mono-matière solidarisés sur une surface de réception ;
- la figure 5 illustre une variante de réalisation du revêtement de sol selon la figure 4, dans laquelle les longerons sont bi-matière ;
- la figure 6 est également une vue de dessus du revêtement de sol selon les figures 1 à 5, partielle et schématique, équipé maintenant de moyens pour pousser les liquides qui sont en forme de cordes ;
- la figure 7 est encore une vue de dessus du revêtement de sol selon les figures 1 à 5, partielle et schématique, équipé ici de moyens pour pousser les liquides qui comprennent des organes d'entraînement manœuvrables selon un mouvement oscillant ;
- la figure 8 est toujours une vue de dessus du revêtement de sol selon les figures 1 à 5, partielle et schématique, équipé ici de moyens pour pousser les liquides qui consistent en des vis manœuvrables en rotation.

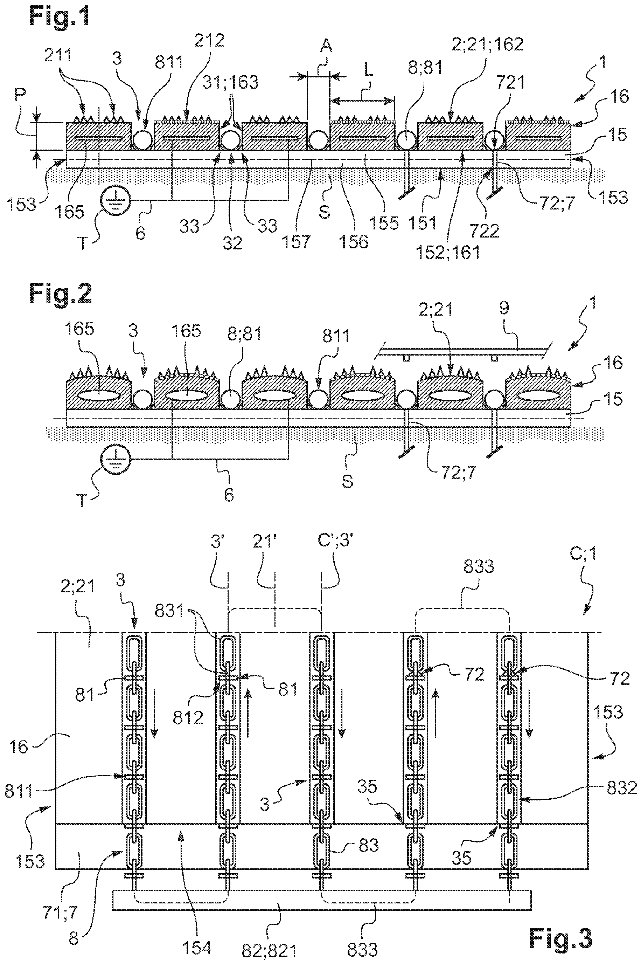

Les systèmes de collecte selon l'invention, représentés sur les figures 1 à 8, sont tout particulièrement adaptés à équiper une enceinte pour l'élevage d'animaux.

Tel que développé ci-après, de tels systèmes de collecte ont pour intérêt de collecter les liquides s'écoulant sur le sol et à de les évacuer, de sorte à offrir une surface d'appui relativement sèche (ou au moins ne présentant pas une humidité excessive) pour les pieds des animaux, et donc plus saine et plus sécurisante.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

Le système de collecte selon l'invention comprend un revêtement de sol 1 qui recouvre une partie au moins du sol de cette enceinte d'élevage.

En particulier, le revêtement de sol 1 est avantageusement implanté au niveau des couloirs de circulation qui sont empruntés par les animaux cheminant entre les différents espaces fonctionnels de l'enceinte d'élevage (par exemple logettes, salles de traite, etc.).

Ce revêtement de sol 1 est apte à collecter les liquides s'écoulant sur le sol.

En l'espèce et comme développé ci-après, ce revêtement de sol 1 comprend une ou plusieurs pièces qui sont réalisées dans au moins un matériau apte à subir une déformation élastique, et qui sont adaptées à être rapportées sur une surface support S.

Pour cela, et tel qu'illustré sur les figures 1 à 8, le revêtement de sol 1 correspondant comprend une surface d'appui 2, sur laquelle les animaux sont destinés à prendre appui, qui est divisée en une pluralité de portions d'appui 21 séparées, les unes des autres, par des rainures 3.

Les rainures 3 constituent ainsi des structures de genre rigoles ou gouttières s'ouvrant vers le haut, au travers de la surface d'appui 2.

Ces rainures 3 sont aptes à collecter (par gravité) et à contenir les liquides s'écoulant sur le revêtement de sol 1, de sorte que ces liquides stagnent le moins possible sur les portions d'appui 21.

Par « liquides », on entend en particulier les déjections liquides produites par les animaux de l'élevage, en particulier leur urine.

Pour cela, comme décrit ci-dessous en relation avec la figure 1, chaque rainure 3 est délimitée par deux faces latérales 31 raccordées par une face de fond 32.

Chaque rainure 3 est en plus terminée par deux extrémités ouvertes 35 (seule l'une d'elles est visible sur la figure 3), autorisant un écoulement et une évacuation du liquide.

Les deux faces latérales 31 s'étendent ici parallèlement, ou au moins approximativement parallèlement, l'une par rapport à l'autre.

Sur les figures 1 à 5, la face de fond 32 consiste en une face de fond plane, s'étendant entre les deux faces latérales 31.

Les bordures supérieures des deux faces latérales 31 de la rainure 3 délimitent une ouverture supérieure longitudinale, s'étendant en regard de la face de fond 32. Cette ouverture supérieure longitudinale s'étend ici sur toute la longueur de la rainure 3.

Chaque bordure latérale de la face de fond 32 est ici raccordée à une bordure inférieure d'une face latérale 31 par l'intermédiaire d'un chanfrein 33 (ou pan coupé) de manière à limiter les angles susceptibles de retenir des salissures.

Ces chanfreins 33 s'étendent selon un angle compris entre 40° et 50° (par exemple de l'ordre de 45°), par rapport à la face de fond 32.

De manière alternative, la face de fond 32 des rainures 3 peut présenter un aspect courbe concave, par exemple une section en arc de cercle.

En outre, ces rainures 3 ont avantageusement des dimensions particulières pour permettre une collecte efficace des liquides, tout évitant de constituer une gêne pour le cheminement des animaux.

A cet égard, comme illustré sur la figure 1, chaque rainure 3 peut être définie par deux dimensions :
- une largeur A, correspondant à la distance séparant ses deux faces latérales 31 en regard, et
- une profondeur P, correspondant à la distance maximale séparant, d'une part, sa face de fond 31 et, d'autre part, les portions d'appui 21 attenantes.

En l'espèce, les rainures 3 ont avantageusement chacune :
- une largeur A d'au maximum 50 mm, de préférence comprise entre 15 et 50 mm, et
- une profondeur P d'au minimum de 15 mm, avantageusement comprise entre 15 et 50 mm.

Les rainures 3 sont avantageusement régulièrement espacées, les unes par rapport aux autres, sur le revêtement de sol 1. En d'autres termes, ces rainures 3 sont avantageusement régulièrement réparties sur le revêtement de sol 1.

De leur côté, les portions d'appui 21 de la surface d'appui 2 s'étendent entre deux rainures 3, et avantageusement dans un même plan ou au moins approximativement dans un même plan.

Ces portions d'appui 21 ont de préférence une surface plane horizontale (figure 1) ou une surface courbe convexe (figure 2).

Ces portions d'appui 21 ont de préférence une largeur L comprise entre 50 et 500 mm, et encore de préférence comprise entre 10 et 300 mm.

Pour une adhérence optimale, ces portions d'appui 21 sont avantageusement munies de reliefs antidérapants 211.

Le relief antidérapant 211 consiste par exemple en un relief monobloc choisi parmi les reliefs utilisés dans les revêtements de sols mis en œuvre de manière classique dans les bâtiments d'élevage, par exemple des éléments saillants en forme de losanges munis de bossages.

Certaines des portions d'appui 21 comportent encore avantageusement une couche d'un matériau abrasif 212, afin de permettre et/ou de favoriser l'usure des sabots et la santé du pied des animaux.

En l'espèce, la surface d'appui 2 comporte, en alternance, une portion d'appui 21 pourvue d'une couche de matériau abrasif 212 et une portion d'appui 21 dépourvue de cette couche de matériau abrasif 212.

Pour obtenir cette couche de matériau abrasif 212, le matériau abrasif est avantageusement mélangé avec le matériau constitutif des portions d'appui 21.

Le matériau abrasif consiste par exemple en des particules de quartz, de métal ou de toute autre matière ayant un pouvoir abrasif sur l'onglon des vaches.

Ce matériau abrasif est rapporté avant, pendant ou après la fabrication de la surface d'appui 2 du revêtement de sol 1.

De préférence, tel qu'illustré sur la figure 3, les rainures 3 sont rectilignes et s'étendent parallèlement les unes par rapport aux autres.

Chaque rainure 3 comporte ainsi un axe longitudinal 3', s'étendant parallèlement à ses faces latérales 31 ; les axes longitudinaux 3' des différentes rainures 3 s'étendent parallèlement les uns aux autres.

De préférence, les rainures 3 sont réparties sur la largeur du revêtement de sol 1 ; et ces rainures 3 s'étendent sur toute la longueur du revêtement de sol 1.

Les rainures 3 délimitent ainsi entre elles une pluralité de portions d'appui 21 qui ont chacune la forme d'une bande rectiligne.

Chaque portion d'appui 21 comporte ainsi un axe longitudinal 21', s'étendant parallèlement à l'axe longitudinal 3' des rainures 3 et à l'axe longitudinal 21' des autres portions d'appui 21.

Une telle structure de revêtement de sol 1 selon l'invention peut prendre différentes formes de réalisation.

Selon une première forme de réalisation illustrée sur les figures 1 et 2, le revêtement de sol 1 consiste en un tapis en matériau élastomère, destiné à être rapporté sur une surface de réception S de l'enceinte d'élevage.

La surface d'appui 2 de ce revêtement de sol 1 est ainsi destinée à subir une déformation élastique, permettant un déplacement confortable des animaux.

La surface de réception S de cette enceinte d'élevage consiste avantageusement en une chape (ou une dalle) en béton, éventuellement armée avec un treillis métallique, ou en bitume.

Ce revêtement de sol 1 consiste en une bande allongée comportant une embase 15 dont :
- une face inférieure 151 est destinée à reposer sur la surface de réception S,
- une face supérieure 152 est munie de structures saillantes 16 ménagées à distance les unes des autres, et
- le contour périphérique est délimité par deux bordures latérales 153 et par deux bordures d'extrémité 154 (seule l'une de ces bordures d'extrémité 154 est visible sur la figure 3).

Les structures saillantes 16 ont chacune une forme allongée, du type longeron ou chevron, régulièrement réparties sur la largeur de l'embase 15 et s'étendant parallèlement à ses bordures latérales 153 (figures 1 et 2).

Ces structures saillantes 16 comportent chacune :
- une face inférieure 161 qui est solidarisée avec la face supérieure 152 de l'embase 15,
- une face supérieure libre 162 formant l'une des portions d'appui 21, et
- deux faces latérales 163 formant les faces latérales 31 des rainures 3.

Chaque structure saillante 16 a avantageusement - une hauteur P comprise entre 15 et 50 mm et - une largeur L comprise entre 50 et 500 mm.

Deux structures saillantes 16 juxtaposées délimitent, entre elles, l'une des rainures 3 du revêtement de sol 1.

Ces rainures 3 sont là encore régulièrement réparties sur la largeur de l'embase 15 et s'étendant parallèlement à ses bordures latérales 153 (figures 1 et 2).

Ces rainures 3 s'étendent avantageusement sur toute la longueur du revêtement de sol 1 (entre les bordures d'extrémité 154 de son embase 15).

Les parties exposées de la face supérieure 152 de l'embase 15, entre deux structures saillantes 16, forment les faces de fond 32 des rainures 3.

Les portions d'appui 21 sont avantageusement adaptées à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur entre la portion d'appui 21 et la face inférieure 151 de l'embase 15, par rapprochement des surfaces respectives.

Pour cela, le revêtement de sol 1 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce revêtement de sol 1 peut être réalisé :
- mono-matériau, ou
- multi-matériaux, par exemple un premier matériau formant l'embase 15 et un second matériau formant les structures saillantes 16.

Ce revêtement de sol 1 peut être réalisé monobloc ou peut être obtenu par plusieurs pièces assemblées de manière amovible ou inamovible.

De manière à optimiser encore ce phénomène de déformation élastique, optionnellement, chaque structure saillante 16 intègre une chambre longitudinale étanche 165 destinée à contenir un fluide (figure 2).

Cette chambre longitudinale étanche 165 s'étend sur toute la longueur, ou au moins approximativement sur tout la longueur, de la structure saillante 16 associée.

Cette chambre longitudinale étanche 165 est avantageusement centrée sur l'axe longitudinal 21' de la structure saillante 16 associée; elle s'étend en plus sur au moins la moitié, voire les trois quart, de la largeur de la structure saillante 16 correspondante.

Le fluide consiste en un gaz (air par exemple), un liquide (eau par exemple), un gel, ou leur mélange.

Chaque chambre étanche 165 comporte avantageusement un conduit d'accès (non représenté), notamment pour son remplissage ou sa vidange.

Une fois les chambres longitudinales étanches 165 remplies par le fluide, les portions d'appui 21 ont avantageusement une forme légèrement bombée convexe, favorisant l'écoulement des liquides en direction des rainures 3 situées de part et d'autre.

De son côté, l'embase 15 a par exemple - une épaisseur comprise entre 2 et 10 mm,-une largeur qui est avantageusement comprise entre 300 et 3000 mm, et - une longueur d'au moins 3 m de long.

Dans le sens de son épaisseur, l'embase 15 comporte ici deux couches, l'une supérieure 155 et l'autre inférieure 156, entre lesquelles est rapportée une couche intercalaire de renfort 157.

La couche intercalaire de renfort 157 est choisie parmi les fibres textiles, de métal ou de tout autre produit apportant la stabilité et/ou la résistance à l'élongation.

Cette couche intercalaire de renfort 157 consiste par exemple en une armature textile servant de renfort, réalisée avantageusement en matériau choisi parmi le nylon, le coton, le polyester, le polyamide ou tout autre textile de renfort.

Ce revêtement de sol 1 peut être également apte à diriger les tensions et courants parasites provenant du sol ou du sous-sol, vers des prises de terre T situées à l'extérieur de l'enceinte d'élevage.

Pour cela, le revêtement de sol 1 comporte avantageusement un réseau de conducteurs électriques 6 destinés à être connectés électriquement entre, d'une part, les chambres longitudinales étanches 165 ménagées dans les structures saillantes 16 et, d'autre part, lesdites prises de terre T.

Un tel revêtement de sol 1, avant sa pose, est avantageusement stocké sous forme de plaques, et de préférence encore sous forme de rouleaux.

Cette dernière forme de réalisation en rouleaux a l'intérêt de permettre une pose simple et rapide du revêtement de sol dans l'enceinte d'élevage par déroulement ; elle permet aussi d'assurer une continuité optimale des rainures 3 pour la récupération efficace des liquides aux extrémités de ces rainures 3.

Ces plaques ou rouleaux ont avantageusement un bord périphérique droit ou rectiligne, ou une structure d'assemblage (type puzzle) facilitant leur solidarisation par emboitement avec une structure d'assemblage complémentaire.

L'embase 15 a une largeur qui est avantageusement comprise entre 300 et 3000 mm, et plus généralement une largeur égale au couloir de circulation équipé.

Un tel revêtement de sol 1 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

En particulier, dans le cas d'une vulcanisation, pour l'obtention de chacun des chambres longitudinales étanches 165, une pièce intercalaire, par exemple une feuille plastique anti-feu, est introduite entre deux des pièces à vulcaniser de sorte à empêcher leur solidarisation locale.

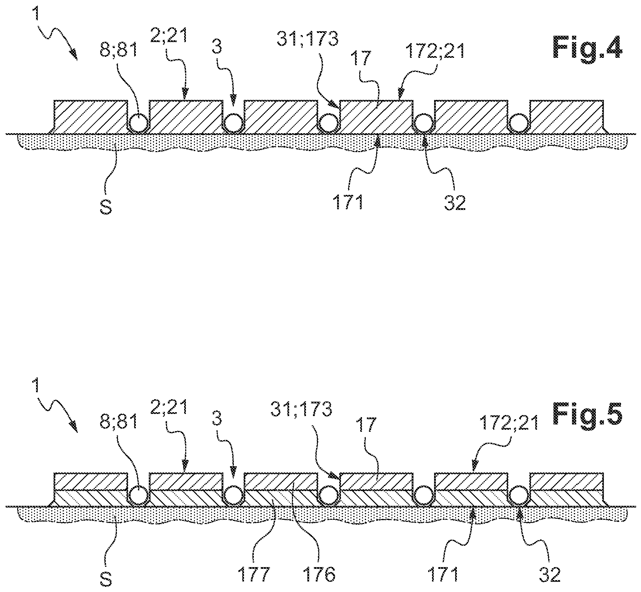

Selon un deuxième mode de réalisation illustré sur les figures 4 et 5, le revêtement de sol 1 est constitué par un ensemble de longerons 17 (ou chevron) qui sont solidarisés directement (en l'absence d'une embase 15) avec la surface de réception S.

Chaque longeron 17 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ces longerons 17 sont agencés de manière juxtaposée, tout en préservant des espaces entre eux qui sont destinés à définir les rainures 3 souhaitées.

La surface de réception S consiste là encore en du béton ou du bitume.

Chaque longeron 17 comprend un ensemble de faces :
- une face inférieure 171, destinée à reposer sur la surface de réception S,
- une face supérieure 172, destinée à former une portion d'appui 21 de la surface d'appui 2, et
- deux faces latérales 173, destinées chacune à former l'une des faces latérales 31 d'une rainure 3.

La face de fond 32 des rainures 3 est quant à elle formée par une portion exposée de la surface de réception S, située entre deux des longerons 17 juxtaposés.

La solidarisation de chaque longeron 17 avec la surface de réception S est obtenue par exemple par le biais d'une fixation mécanique (pointage, rivetage, etc.) ou d'une fixation chimique (collage notamment).

Selon une première variante de réalisation illustrée sur la figure 4, chaque longeron 17 est réalisé monobloc, par exemple en matériau élastomère ou en matériau plastique similaire à celui décrit ci-dessus en relation avec les figures 1 et 2.

Selon une deuxième variante de réalisation illustrée par la figure 5, chaque longeron 17 est constitué d'au moins deux couches superposées :
- une couche inférieure 177 formant la face inférieure 171 du longeron 17, et
- une couche supérieure 176 formant la face supérieure 172 du longeron 17.

Ces deux couches superposées 176, 177 sont avantageusement solidarisées par vulcanisation, par collage ou par soudage.

L'intérêt de cette seconde forme de réalisation est la facilité d'installation et la possibilité d'utiliser des produits usagés de différentes épaisseurs.

Dans une variante de réalisation des revêtements de sol 1 selon les figures 3 à 5, il est encore possible de recouvrir les longerons 17 (figures 3 et 4) avec un film réalisé en matériau élastomère, renforcé de fibres, destiné à former la surface supérieure du revêtement de sol 1.

Les parties du film, épousant les rainures 3, sont avantageusement maintenues au moyen de profilés à section courbe concave (par exemple en arc de cercle) qui sont fixés mécaniquement dans la face de fond 32.

Les parties de film, entre les rainures 3, forment quant à elles les portions d'appui 21.

Ce film épouse alors la surface sous-jacente de sorte à constituer les portions d'appui 21 et les rainures 3 du revêtement de sol 1.

En pratique, et de manière générale pour les différents modes de réalisation, le revêtement de sol 1 est destiné à constituer le sol d'une enceinte d'élevage.

En l'occurrence, l'enceinte d'élevage comprend un ensemble d'espaces, entourant notamment les logettes, au niveau desquels les animaux sont destinés à circuler et à stationner, désignés encore couloirs de circulation.

Un couloir de circulation C, illustré très schématiquement sur la figure 3, comporte avantageusement un axe longitudinal C'.

Et le revêtement de sol 1 est de préférence installé de sorte que l'axe longitudinal 3' de ses rainures 3 soit agencé parallèlement, ou au moins approximativement parallèlement, par rapport à l'axe longitudinal C' du couloir C.

Cette orientation est en particulier utile pour favoriser l'évacuation des liquides contenus dans les rainures 3 jusqu'à des moyens de collecte 7 équipant l'enceinte d'élevage et qui sont implantés à l'extrémité des couloirs C (figure 3).

Les moyens de collecte 7 comprennent en particulier une fosse 71 (ou un canal de reprise), installée au niveau de l'une au moins des deux extrémités ouvertes 35 des rainures 3 du revêtement de sol 1 (seule l'une d'elles est visible sur la figure 3).

Ces moyens de collecte 7 peuvent encore comporter des conduits 72 pour l'évacuation des liquides (seuls quelques conduits 72 sont représentés sur les figures 1 et 2 dans un souci de simplification).

Les conduits 72 débouchent, d'un côté amont 721, dans les rainures 3 et, d'un côté aval 722, en regard des orifices d'un caillebotis (représenté très schématiquement).

Dans le cas d'un revêtement de sol 1 du type tapis (figures 1 à 3), les conduits 72 sont avantageusement ménagés dans l'épaisseur de son embase 15.

Une pente est avantageusement appliquée au revêtement de sol 1 (et en particulier à ses rainures 3), pour favoriser l'écoulement des fluides collectés en direction des moyens de collecte 7, à savoir la fosse 71 (ou canal de reprise) ou les conduits 72.

Toutefois, de manière à générer une circulation optimale des liquides en direction de ces moyens de collecte 7, le système de collecte selon l'invention comprend encore des moyens 8 pour pousser les liquides le long des rainures 3 du revêtement de sol 1.

En l'espèce, ces moyens de poussée 8 comprennent pour cela des organes d'entrainement 81 qui sont rapportés dans les rainures 3 et qui sont accouplés avec des moyens de manœuvre 82 pour leurs appliquer un mouvement destiné à provoquer le déplacement des liquides dans un sens adapté au sein de ces rainures 3.

Selon une première famille de réalisation, telle que représentée schématiquement sur les figures 3, 6 et 7, les moyens de poussée 8 peuvent comprendre :
- des organes d'entrainement 81 qui sont chacun répartis sur la longueur d'au moins un corps allongé 83 rapporté dans et le long des rainures 3, et
- des moyens 82 pour la manœuvre en translation desdits organes d'entraînement 81 au sein de leurs rainures 3 respectives, de sorte que chacun desdits organes d'entrainement 81 génère une circulation de liquide au sein de la rainure 3 associée.

Le corps allongé 83 s'entend parallèlement à l'axe longitudinal 3' de la rainure 3 associée.

Chaque organe d'entrainement 81 constitue ainsi une sorte de rabot ou de racleur, apte à pousser/repousser les liquides présents au sein de la rainure 3 associée.

Chaque organe d'entrainement 81 a pour cela une bordure périphérique 811 qui épouse, au moins approximativement, la face de fond 32 et une partie inférieure des faces latérales 31 de la rainure 3 associée.

Cette bordure périphérique 811, par exemple circulaire, comporte :
- une largeur correspondant, au jeu près, à la largeur A de la rainure 3 associée, ou légèrement inférieure à cette dernière (par exemple compris entre 90 % et 100 % par rapport à la largeur A de la rainure 3), et
- une hauteur inférieure à la hauteur P de la rainure 3 associée.

L'organe d'entrainement 81 s'étend ainsi dans l'épaisseur et l'encombrement de sa rainure 3, sans faire saillie par rapport à l'ouverture supérieure de cette dernière ni par rapport aux portions d'appui 21 attenantes (figures 1 et 2).

Chaque organe d'entraînement 81 comporte en plus, d'un côté aval, une surface de poussée 812 qui est apte à exercer ladite poussée recherchée sur le liquide en présence.

Ces organes d'entrainement 81 sont par exemple espacés d'une distance comprise entre 50 et 1000 mm, avantageusement réglable suivant le nombre d'animaux en présence et le type de déjection.

Ces organes d'entrainement 81 peuvent prendre différentes formes de réalisation, notamment en fonction du type de manœuvre en translation qui leur est appliqué.

Par exemple, les organes d'entrainement 81 peuvent être manœuvrés :
- selon une direction parallèle à l'axe longitudinal 3' de leurs rainures 3 respectives et
- dans un unique sens de translation (amont vers aval) au sein de chaque rainure 3.

Dans ce cas, selon une première forme de réalisation représentée sur la figure 3, le corps allongé 83 consiste en une chaîne constituée de plusieurs maillons 831 assemblés entre eux.

Certains de ces maillons 831 comportent les organes d'entrainement 81 qui consistent en des pièces saillantes rapportées (par exemple des pièces aptes à limiter les frottements et à résister à l'abrasion, notamment en polyuréthane ou en polyéthylène haute densité).

Ces organes d'entraînement 81 consistent par exemple en des disques qui sont orientés perpendiculairement à l'axe longitudinale 3' de la rainure 3 associée.

De manière alternative, non représentée, les organes d'entrainement sont formés directement par les maillons 831 de ladite chaîne 83.

Certains au moins des maillons 831 comportent alors pour cela des parties saillantes qui sont agencées pour former une surface de poussée 812.

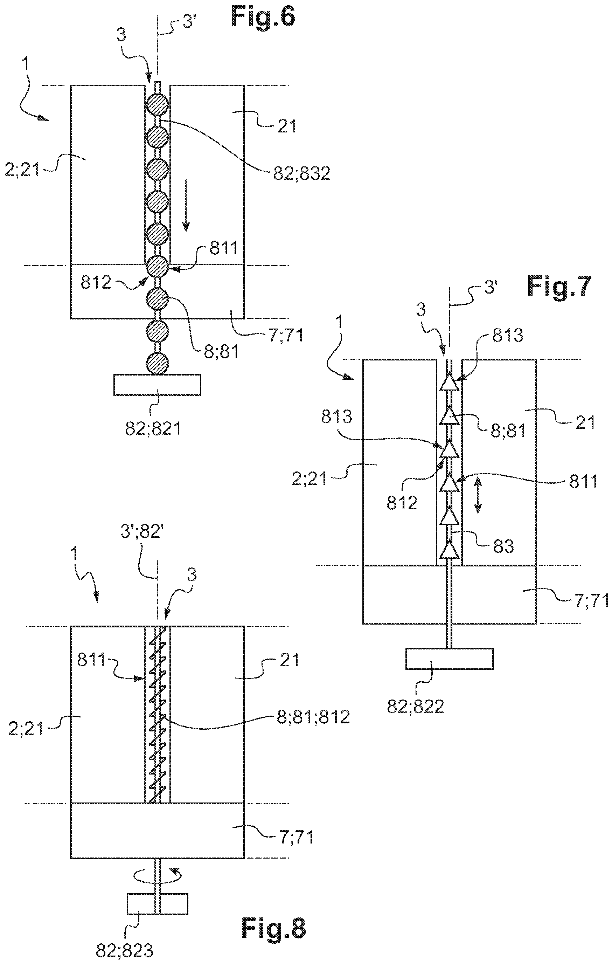

Selon une deuxième forme de réalisation représentée schématiquement sur la figure 6 (seule une rainure 3 est représentée dans un souci de simplification), le corps allongé 83 consiste en une corde.

Les organes d'entrainement 81 consistent alors avantageusement en des nœuds qui sont répartis sur la longueur de ladite corde 83 et qui forment chacun l'une des surfaces de poussée 812.

Pour assurer la manœuvre en sens unique de translation dans chaque rainure 3, les moyens de poussée 8 comporte ici un unique corps allongé 83 (par exemple la chaîne ou la corde), continu, s'étendant au sein de chacune des rainures 3.

Ce corps allongé 83 comporte ainsi des brins actifs 832 qui s'étendent chacun au sein de l'une des rainures 3 et qui sont raccordés par des brins de jonction 833 s'étendant entre deux des brins actifs 832 successifs (figure 3).

Le corps allongé 83 comporte encore un brin retour (non représenté), pour la fermeture et la continuité dudit corps allongé 83.

Dans ce cas, les moyens de manœuvre 82 consistent en des moyens de manœuvre 821 comprenant avantageusement un ensemble de poulies (non représentées) coopérant chacune avec l'un des brins de jonction 833 pour guider le corps allongé 83 entre deux rainures 3 et au sein de ces rainures 3.

Les poulies sont en particulier agencées ici de sorte que le corps allongé 83 forme un ensemble d'aller retour (ou une forme générale de S) au sein des rainures 3 successives.

L'une au moins de ces poulies est motorisée pour assurer le cheminement du corps allongé 83.

La vitesse de cheminement est par exemple comprise entre 1 et 10 m/min, notamment suivant la concentration en animaux au m² et le type de déjection.

Deux brins actifs 832 successifs cheminent ainsi dans des sens inverses l'un par rapport à l'autre.

En d'autres termes, un brin actif 832 d'une rainure 3 chemine depuis une première extrémité vers une seconde extrémité du revêtement de sol 1, et inversement pour les brins actifs 832 juxtaposés (comme illustré par les flèches sur la figure 3).

Les organes d'entrainement 81 associés sont ainsi destinés à cheminer successivement sur la longueur de chacune des rainures 3 du revêtement de sol 1, depuis une rainure 3 amont (à gauche sur la figure 3) jusqu'à une rainure 3 aval (à droite sur la figure 3), avant de revenir à la rainure amont précitée.

Les liquides sont ainsi évacués alternativement au niveau de l'une des deux extrémités ouvertes 35 des rainures 3, en regard desquels sont ménagés une fosse ou un canal de reprise 71.

Dans chaque rainure 3, le liquide est mis en circulation dans un sens identique au sens de cheminement des organes d'entrainement 81.

De manière alternative non représentée, les moyens de poussée 8 peuvent encore se composer de plusieurs corps allongés 83 qui sont chacun munis d'organes d'entrainement 81 agencés en série sur leurs longueurs respectives.

Chaque corps allongé 83 coopère alors avec un groupe de rainures 3 et avec des moyens de manœuvre 821 pour assurer son déplacement dans les rainures 3 correspondantes.

Selon une autre variante (figure 7), les organes d'entrainement 81 peuvent être manœuvrés selon :
- une direction parallèle à l'axe longitudinal 3' de leurs rainures 3 respectives et
- un mouvement oscillant aval-amont (amont vers aval et aval vers amont) au sein de leurs rainures 3 respectives.

Seuls les organes d'entrainement 81 d'une rainure 3 sont représentés dans un souci de simplification.

Dans ce cas, les organes d'entrainement 81, répartis sur un corps allongé 83 rigide, comportent chacun deux surfaces opposées :
- une surface aval 812 constituant la surface de poussée apte à provoquer le cheminement du liquide à évacuer de l'amont vers l'aval, et
- une surface amont 813 qui présente un phénomène de poussée réduit (voire nul) sur les liquides lors du mouvement retour aval vers amont.

Pour cela, la surface aval 812 s'étend par exemple dans un plan perpendiculaire à l'axe longitudinal 3' des rainures 3 associées.

Et la surface amont 813 a par exemple une forme profilée de l'aval vers l'amont, par exemple diédrique ou conique.

Pour assurer une telle manœuvre en oscillation, les moyens de manœuvre 822 consistent avantageusement en un système bielle/piston.

La vitesse de cheminement est par exemple comprise entre 1 et 10 m/min, adaptée notamment en fonction de la concentration en animaux au m² et le type de déjection.

Selon une autre famille de réalisation, les organes d'entrainement 81 peuvent encore être manœuvrés en rotation au sein de leurs rainures 3 respectives (figure 8).

Dans ce cas, ces organes d'entrainement 81 consistent chacun avantageusement en une vis munie d'une surface de poussée 812 qui est de forme hélicoïdale et qui s'étend sur tout ou partie de sa longueur.

Cette vis 81 s'étend avantageusement sur toute la longueur d'une rainure 3.

De manière alternative, chaque rainure 3 peut comporter deux vis 81, s'étendant chacune - sur une moitié de sa longueur et - depuis l'une des deux extrémités 35 de cette rainure 3.

Là encore, cet organe d'entrainement 81 du type vis s'inscrit dans un encombrement périphérique 811 cylindrique qui épouse, au moins approximativement, la face de fond 32 et une partie inférieure des faces latérales 31 de la rainure 3 associée.

Cet encombrement périphérique 811 a une section circulaire, dont le diamètre correspond, au jeu près, à la largeur A de la rainure 3 associée, ou légèrement inférieure à cette dernière (par exemple compris entre 90% et 100% par rapport à la largeur A de la rainure 3).

L'organe d'entrainement 81 s'étend ainsi dans l'épaisseur et l'encombrement de sa rainure 3, sans faire saillie au niveau de l'ouverture supérieure de cette dernière ni au niveau des portions d'appui 21 attenantes (figures 1 et 2).

Les moyens de manœuvre 823 consistent alors en des moyens pour la manœuvre en rotation de chacun de ces organes d'entrainement 81 autour d'un axe 82' s'étendant parallèlement à l'axe longitudinal 3' de la rainure 3 associée.

Ces moyens de manœuvre 83 consistent par exemple en un motoréducteur et/ou un moteur entraînant un renvoi du type chaines/courroies.

La vitesse de rotation est par exemple comprise entre 10 et 40 tours par minute, suivant la concentration en animaux au m² et le type de déjection.

De manière générale, pour une hygiène efficace et une évacuation optimale des liquides, le système de collecte comporte encore avantageusement des moyens 9 pour une alimentation des rainures 3 avec un liquide de traitement (figure 2).

Ces moyens d'alimentation 9 consistent avantageusement en des moyens permettant un écoulement du liquide de traitement directement dans les rainures 3, par exemple un dispositif du type goutte à goutte.

Ces moyens d'alimentation 9 sont alors avantageusement implantés d'un côté amont des rainures 3 (à proximité de l'une au moins de ses extrémités ouvertes 35), tenant compte du sens de cheminement des liquides.

Le liquide de traitement contient par exemple des bactéries d'intérêt et/ou un agent de désinfection.

Ces moyens d'alimentation 9 peuvent également comprendre des rampes munies de buses (non représentés) pour l'application de liquide de traitement directement sur les moyens de poussée 8, en particulier sur les brins de jonction 833 s'étendant au niveau de la fosse 71.

En pratique, les moyens d'alimentation 9 peuvent comprendre plusieurs rampes, à savoir :
- une rampe de buses pour la projection de désinfectant,
- une rampe de buses pour la projection de détergent, et
- une rampe de buses pour la projection d'un liquide de rinçage.

Les brins de jonction 833 peuvent encore coopérer avec des brosses, pour assurer leur nettoyage mécanique.

En fonctionnement, le revêtement de sol 1 est susceptible de recevoir différentes matières organiques, notamment des déjections (urine, fèces).

Le revêtement de sol 1 permet alors un écoulement des liquides dans les rainures 3, évitant ainsi l'accumulation de ces liquides sur les portions d'appui 21 qui restent ainsi relativement sèches.

Les matières solides, notamment les fèces, restent principalement sur les portions d'appui 21, de sorte à éviter leur mélange et à limiter la production d'ammoniac au sein de l'enceinte d'élevage.

Lors d'un nettoyage de ce revêtement de sol 1, le liquide de nettoyage va également s'écouler dans ces rainures 3, évitant que les portions d'appui 21 restent mouillées de manière excessive.

Ce phénomène permet par conséquent aux animaux de cheminer sur une surface d'appui 2 relativement saine, avec un risque de chute réduit et sans humidification de leurs pieds.

L'ensemble des liquides s'écoulant dans les rainures 3 sont alors efficacement évacué vers les moyens de collecte 7 (notamment la fosse 71 ou le canal de reprise) par la mise en œuvre des moyens de poussée 8 décrits ci-dessus en relation avec les figures 1 à 8.

Comme évoqué, les organes d'entrainement 81 sont mises en mouvement (en sens unique, en oscillation ou en rotation selon le cas) de sorte à générer le cheminement des liquides vers les moyens de collecte 7 dédiés.

Les moyens de poussée 8 permettent ainsi une circulation et une évacuation active des liquides contenus dans les rainures 3, pour éviter leur stagnation et pour limiter le développement d'ammoniac et de microorganismes dans l'enceinte d'élevage.

Pour un nettoyage optimal de ces rainures 3, le liquide de traitement peut être déversé par l'intermédiaire des moyens d'alimentation 9 précités.

De manière générale, les moyens pour pousser les liquides 8 décrits ci-dessus peuvent être adaptés à façon au sein de l'un quelconque des revêtements de sol 1 constitutifs du système de collecte selon l'invention.

Encore de manière générale, le revêtement de sol 1 selon l'invention permet ainsi une évacuation rapide et en continu des liquides par rapport à la surface d'appui 2 et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les rainures 3, par rapport aux fèces qui restent principalement sur les portions d'appui 21, de sorte à éviter leur mélange et à limiter la production d'ammoniac au sein de l'enceinte d'élevage.

## Revendications

1. Système pour la collecte des liquides s'écoulant sur le sol d'une enceinte pour l'élevage d'animaux, par exemple de bovins, lequel système de collecte comprend :
(i) un revêtement de sol (1), comprenant :
- des portions d'appui (21) sur lesquels les animaux sont destinés à prendre appui, et
- au moins deux rainures (3) réparties sur ledit revêtement de sol (1), séparant lesdites portions d'appui (21) et destinées à recevoir les liquides s'écoulant sur ledit revêtement de sol (1),
(ii) des moyens (7) pour la collecte des liquides circulant au sein desdites rainures (3), et
(iii) des moyens (8) pour pousser les liquides au sein des rainures (3) dudit revêtement de sol (1), de manière à générer une circulation desdits liquides en direction desdits moyens de collecte (7),
**caractérisé en ce que** ledit revêtement de sol (1) est réalisé dans au moins un matériau apte à subir une déformation élastique,
**en ce que** ledit revêtement de sol (1) est adapté à être rapporté sur une surface support (S),
lequel revêtement de sol (1) est constitué par :
- un ensemble de longerons (17) qui sont solidarisés avec une surface support (S), cela de manière juxtaposée et tout en préservant un espacement définissant les rainures (3), ou
- un tapis comportant une embase (15) dont une face inférieure (151) est destinée à reposer sur une surface support (S), et une face supérieure (152) est munie de structures saillantes (16) ménagés à distance les uns des autres, qui délimitent entre elles les rainures (3) et dont la face libre (162) forme la portion d'appui (21).

2. Système pour la collecte des liquides s'écoulant sur le sol d'une enceinte pour l'élevage d'animaux, selon la revendication 1, **caractérisé en ce que** les moyens (8) pour pousser les liquides comprennent :
- des organes d'entrainement (81) qui sont chacun rapportés dans l'une desdites rainures (3), lesquels organes d'entrainement (81) comportent chacun une surface de poussée (812) qui est apte à pousser les liquides présents au sein de ladite rainure (3) associée, et
- des moyens (82) pour la manœuvre desdits organes d'entraînement (81) au sein de leurs rainures (3) respectives, de sorte que ladite au moins une surface de poussée (812) génère ladite circulation de liquide au sein de sa rainure (3).

3. Système pour la collecte des liquides s'écoulant sur le sol d'une enceinte pour l'élevage d'animaux, selon la revendication 2, **caractérisé en ce que** les organes d'entrainement (81), mobiles en translation au sein des rainures (3), sont répartis sur la longueur d'au moins un corps allongé (83).

4. Système pour la collecte des liquides s'écoulant sur le sol d'une enceinte pour l'élevage d'animaux, selon la revendication 3, **caractérisé en ce que** :
- le corps allongé (83) consiste en une corde et les organes d'entrainement (81) consistent chacune en un nœud ménagé sur ladite corde (83), ou
- le corps allongé (83) consiste en une chaîne constituée de plusieurs maillons (831) assemblés entre eux et **en ce que** les organes de poussée (81) sont formés par les maillons (831) de ladite chaîne (83) ou par des pièces saillantes (81) rapportées sur les maillons (831) de ladite chaîne (83).

5. Système pour la collecte des liquides s'écoulant sur le sol d'une enceinte pour l'élevage d'animaux, selon l'une quelconque des revendications 2 à 4, **caractérisé en ce que** les moyens de manœuvre (82) consistent en :
- des moyens (821) pour la manœuvre des organes d'entraînement (81) dans un unique sens de cheminement au sein de chaque rainure (3), ou
- des moyens (822) pour la manœuvre des organes d'entraînement (81) selon un mouvement oscillant, dans lequel les organes d'entrainement (81) comportent une surface amont (813) apte à limiter la poussée sur les liquides.

6. Système pour la collecte des liquides s'écoulant sur le sol d'une enceinte pour l'élevage d'animaux, selon la revendication 2, **caractérisé en ce que** :
- l'un au moins des organes d'entrainement (81) consiste en un organe en forme de vis formant une surface de poussée (812) hélicoïdale, et
- les moyens de manœuvre (82) consistent en des moyens (823) pour la manœuvre en rotation dudit au moins un organe d'entrainement (81) en forme de vis.

7. Système pour la collecte des liquides s'écoulant sur le sol d'une enceinte pour l'élevage d'animaux, selon l'une quelconque des revendications 1 à 6, **caractérisé en ce qu'**il comporte encore des moyens (9) pour une alimentation des rainures (3) avec un liquide de traitement.

8. Système pour la collecte des liquides s'écoulant sur le sol d'une enceinte pour l'élevage d'animaux, selon l'une quelconque des revendications 1 à 7, **caractérisé en ce que** les rainures (3) sont rectilignes et s'étendent parallèlement les unes par rapport aux autres, délimitant entre elles une pluralité de portions d'appui (21) qui ont chacune la forme d'une bande rectiligne.

9. Système pour la collecte des liquides s'écoulant sur le sol d'une enceinte pour l'élevage d'animaux, selon la revendication 8, **caractérisé en ce que** les rainures (3) ont chacune :
- une largeur comprise entre 15 et 50 mm et
- une profondeur comprise entre 15 et 50 mm, et
**en ce que** les portions d'appui ont une largeur comprise entre 50 et 500 mm.

10. Système pour la collecte des liquides s'écoulant sur le sol d'une enceinte pour l'élevage d'animaux, selon l'une quelconque des revendications 1 à 9, **caractérisé en ce que** les moyens de poussée (8) s'étendent dans l'épaisseur et l'encombrement desdites rainures (3), sans faire saillie par rapport auxdites portions d'appui (21) attenantes.

11. Enceinte d'élevage équipée d'un système de collecte (1, 7, 8) selon l'une quelconque des revendications 1 à 10.

12. Enceinte d'élevage selon la revendication 11, **caractérisée en ce qu'**elle comporte un couloir de circulation (C) comportant un axe longitudinal (C') et dont la surface support (S) est recouverte par un revêtement de sol (1), et **en ce que** les rainures (3) dudit revêtement de sol (1) sont agencées parallèlement, ou au moins approximativement parallèlement, par rapport audit axe longitudinal (C').

## Patentansprüche

1. System zum Sammeln von auf dem Boden eines Gehäuses strömenden Flüssigkeiten in der Tierhaltung, zum Beispiel von Rindern, wobei das System zum Sammeln
(i) einen Bodenbelag, der
- Abstützabschnitte (21), auf denen sich die Tiere abstützen sollen, und
- wenigstens zwei über den Bodenbelag (1) verteilte Rillen (3), die die Abstützabschnitte (21) voneinander trennen und dazu bestimmt sind, die auf dem Bodenbelag (1) strömenden Flüssigkeiten aufzunehmen, aufweist,
(ii) Mittel (7) zum Sammeln der in den Rillen (3) strömenden Flüssigkeiten und
(iii) Mittel (8) zum Wegdrücken der Flüssigkeiten innerhalb der Rillen (3) des Bodenbelags (1), um ein Strömen der Flüssigkeiten in Richtung zu den Mitteln (7) zum Sammeln zu erzeugen,
aufweist,
**dadurch gekennzeichnet, daß** der Bodenbelag (1) aus wenigstens einem eine elastische Verformung ertragen könnenden Material gefertigt ist,
daß der Bodenbelag (1) dazu ausgelegt ist, auf eine Trägeroberfläche (S) aufgebracht zu werden,
wobei der Bodenbelag (1)
- aus einer Gesamtheit von Längsträgern (17), die mit einer Trägeroberfläche (S) fest verbunden sind, und zwar nebeneinander liegend und unter Wahrung eines die Rillen (3) definierenden Abstands, oder
- aus einem Teppich, der eine Basis (15) aufweist, von der eine Unterseite (151) dazu bestimmt ist, auf einer Trägeroberfläche (S) aufzuliegen, und von der eine Oberseite (152) mit in einem Abstand voneinander angeordneten, hervorstehenden Strukturen (16) versehen ist, die zwischen sich die Rillen (3) begrenzen und deren freie Seite (162) den Abstützabschnitt (21) bildet,
gebildet ist.

2. System zum Sammeln von auf dem Boden eines Gehäuses strömenden Flüssigkeiten in der Tierhaltung gemäß Anspruch 1, **dadurch gekennzeichnet, daß** die Mittel (8) zum Wegdrücken der Flüssigkeiten
- Antriebsorgane (81), die jeweils eine Oberfläche (812) zum Drücken, die dazu ausgelegt ist, die in den zugehörigen Rillen (3) befindlichen Flüssigkeiten wegzudrücken, und
- Mittel (82) zum Betätigen der Antriebsorgane (81) innerhalb der jeweiligen Rillen (3), damit die wenigstens eine Oberfläche (812) zum Drücken den Flüssigkeitsstrom in der Rille (3) erzeugt,
aufweisen.

3. System zum Sammeln von auf dem Boden eines Gehäuses strömenden Flüssigkeiten in der Tierhaltung gemäß Anspruch 2, **dadurch gekennzeichnet, daß** die innerhalb der Rillen (3) translatorisch beweglichen Antriebsorgane (81) über die Länge wenigstens eines länglichen Körpers (83) verteilt sind.

4. System zum Sammeln von auf dem Boden eines Gehäuses strömenden Flüssigkeiten in der Tierhaltung gemäß Anspruch 1, **dadurch gekennzeichnet, daß**
- der längliche Körper (83) aus einem Seil besteht und die Antriebsorgane (81) jeweils aus einem am Seil (83) gebildeten Knoten bestehen oder
- der längliche Körper (83) aus einer aus mehreren miteinander-verbundenen Gliedern (831) gebildeten Kette besteht und daß die Organe (81) zum Drücken durch die Glieder (831) der Kette (83) oder durch auf die Glieder (831) der Kette (83) aufgebrachte hervorstehende Stücke (81) gebildet sind.

5. System zum Sammeln von auf dem Boden eines Gehäuses strömenden Flüssigkeiten in der Tierhaltung gemäß einem der Ansprüche 2 bis 4, **dadurch gekennzeichnet, daß** die Betätigungsmittel (82) aus
- Mitteln (821) zum Betätigen der Antriebsorgane (81) in einer einzigen Richtung in jeder Rille (3) oder
- Mitteln (822) zum Betätigen der Antriebsorgane (81) in einer oszillierenden Bewegung, wobei die Antriebsorgane (81) eine stromaurwärtige Fläche (813) aufweisen, die dazu ausgelegt ist, den Druck auf die Flüssigkeiten zu begrenzen,
bestehen.

6. System zum Sammeln von auf dem Boden eines Gehäuses strömenden Flüssigkeiten in der Tierhaltung gemäß Anspruch 2, **dadurch gekennzeichnet, daß**
- wenigstens eins der Antriebsorgane (81) aus einem Organ in Form einer Schraube besteht, die eine spiralförmige Druckfläche (812) bildet, und
- die Betätigungsmittel (82) aus Mitteln (823) zum drehenden Betätigen des wenigstens einen Antriebsorgans (81) in Form einer Schraube bestehen.

7. System zum Sammeln von auf dem Boden eines Gehäuses strömenden Flüssigkeiten in der Tierhaltung gemäß einem der Ansprüche 1 bis 6, **dadurch gekennzeichnet, daß** es außerdem Mittel (9) für eine Versorgung der Rillen (3) mit einer Behandlungsflüssigkeit aufweist.

8. System zum Sammeln von auf dem Boden eines Gehäuses strömenden Flüssigkeiten in der Tierhaltung gemäß einem der Ansprüche 1 bis 7, **dadurch gekennzeichnet, daß** die Rillen (3) geradlinig sind und sich parallel zueinander erstrecken, wobei sie zwischen sich eine Mehrzahl Abstützabschnitte (21) begrenzen, die jeweils die Form eines geradlinigen Bandes aufweisen.

9. System zum Sammeln von auf dem Boden eines Gehäuses strömenden Flüssigkeiten in der Tierhaltung gemäß Anspruch 8, **dadurch gekennzeichnet, daß** jede der Rillen (3)
- eine Breite zwischen 15 und 50 mm und
- eine Tiefe zwischen 15 und 50 mm
aufweist und
daß die Abstützabschnitte eine Breite zwischen 50 und 500 mm aufweisen.

10. System zum Sammeln von auf dem Boden eines Gehäuses strömenden Flüssigkeiten in der Tierhaltung gemäß einem der Ansprüche 1 bis 9, **dadurch gekennzeichnet, daß** sich die Mittel (8) zum Wegdrücken in der Dicke und im Ausmaß der Rillen (3) erstrecken, ohne gegenüber den angrenzenden Abstützabschnitten (21) hervorzusehen.

11. Gehäuse für Tierhaltung, das mit einem System zum Sammeln (1, 7, 8) gemäß einem der Ansprüche 1 bis 10 ausgestattet ist.

12. Gehäuse für Tierhaltung gemäß Anspruch 11, **dadurch gekennzeichnet, daß** es einen Durchströmungskanal (C) mit einer Längsachse (C') aufweist und daß dessen Trägeroberfläche (S) mit einem Bodenbelag (1) versehen ist und daß die Rillen (3) des Bodenbelags (1) parallel oder wenigstens näherungsweise parallel zur Längsachse (C') angeordnet sind.

## Claims

1. A system for collecting liquids flowing on the ground of an enclosure for livestock, for example cattle, wherein said collection system comprises:
(i) a flooring (1), comprising:
- bearing portions (21) on which the animals are intended to bear, and
- at least two grooves (3) distributed over said flooring (1), separating said bearing portions (21) from each other and intended to receive the liquids flowing on said flooring (1),
(ii) means (7) for collecting liquids circulating within said grooves (3), and
(iii) means (8) for pushing the liquids within the grooves (3) of said flooring (1), so as to generate a circulation of said liquids towards said collection means (7),
**characterized in that** said flooring (1) is made of at least one material adapted to undergo an elastic deformation,
and **in that** said flooring (1) is adapted to be placed on a support surface (S),
wherein said flooring (1) is consisted of:
- a set of longitudinal members (17) that are fastened to a support surface (S), juxtaposed to each other while preserving a space defining the grooves (3), or
- a carpet including a base (15), a lower face (151) of which is intended to rest on a support surface (S), and an upper face (152) of which is provided with protruding structures (16) arranged remote from each other, which delimit between each other the grooves (3) and the free face (162) of which forms the bearing portion (21).

2. The system for collecting liquids flowing on the ground of an enclosure for livestock according to claim 1, **characterized in that** the means (8) for pushing the liquids comprise:
- leading members (81) that are each placed in one of said grooves (3), said leading members (81) each including a pushing surface (812) that is adapted to push the liquids present within said associated groove (3), and
- means (82) for operating said leading members (81) within their respective grooves (3), so that said at least one pushing surface (812) generates said circulation of liquid within its groove (3).

3. The system for collecting liquids flowing on the ground of an enclosure for livestock according to claim 2, **characterized in that** the leading members (81), mobile in translation within the grooves (3), are distributed over the length of at least one elongated body (83).

4. The system for collecting liquids flowing on the ground of an enclosure for livestock according to claim 3, **characterized in that**:
- the elongated body (83) consists of a rope and the leading members (81) each consist of a knot formed on said rope (83), or
- the elongated body (83) consists of a chain consisted of several links (831) assembled to each other and **in that** the pushing members (81) are formed by the links (831) of said chain (83) or by protruding parts (81) placed on the links (831) of said chain (83).

5. The system for collecting liquids flowing on the ground of an enclosure for livestock according to any one of claims 2 to 4, **characterized in that** the operating means (82) consist of:
- means (821) for operating the leading members (81) in a single progression direction within each groove (3), or
- means (822) for operating the leading members (81) according to an oscillating movement, wherein the leading members (81) include an upstream surface (813) adapted to limit the thrust on the liquids.

6. The system for collecting liquids flowing on the ground of an enclosure for livestock according to claim 2, **characterized in that**:
- at least one of the leading members (81) consists of a screw-shaped member forming a helical pushing surface (812), and
- the operating means (82) consist of means (823) rotating said at least one screw-shaped leading member (81).

7. The system for collecting liquids flowing on the ground of an enclosure for livestock according to any one of claims 1 to 6, **characterized in that** it also includes means (9) for supplying the grooves (3) with a process liquid.

8. The system for collecting liquids flowing on the ground of an enclosure for livestock according to any one of claims 1 to 7, **characterized in that** the grooves (3) are rectilinear and extend parallel relative to each other, delimiting between each other a plurality of bearing portions (21) each having the shape of a rectilinear strip.

9. The system for collecting liquids flowing on the ground of an enclosure for livestock according to claim 8, **characterized in that** the grooves (3) each have:
- a width comprised between 15 and 50 mm, and
- a depth comprised between 15 and 50 mm, and
**in that** the bearing portions have a width comprised between 50 and 500 mm.

10. The system for collecting liquids flowing on the ground of an enclosure for livestock according to any one of claims 1 to 9, **characterized in that** the pushing means (8) extend into the thickness and the volume of said grooves (3), without protruding with respect from said adjacent bearing portions (21).

11. Enclosure for livestock equipped with a collection system (1, 7, 8) according to any one of claims 1 to 10.

12. Enclosure for livestock according to claim 11, **characterized in that** it includes a circulation corridor (C) having a longitudinal axis (C') and whose support surface (S) is covered with a flooring (1), and **in that** the grooves (3) of said flooring (1) are arranged parallel, or at least approximately parallel, to said longitudinal axis (C').
